# EUROPÄISCHE PATENTSCHRIFT

(11) **EP 2 798 315 B1**
(45) Veröffentlichungstag und Bekanntmachung des Hinweises auf die Patenterteilung: **25.04.2018**
(21) Anmeldenummer: 12798233.8
(22) Anmeldetag: 22.11.2012
(51) Int. Cl.: G01D 21/00, H02M 3/156, G05B 19/042

(54) **SCHALTUNGSANORDNUNG ZUR REDUZIERUNG DER VERLUSTLEISTUNG BEI EINEM AKTIVEN STROMAUSGANG EINES FELDGERÄTS**
CIRCUIT ARRANGEMENT FOR REDUCING POWER DISSIPATION IN AN ACTIVE CURRENT OUTPUT OF A FIELD DEVICE
CIRCUIT POUR RÉDUIRE LA PUISSANCE DISSIPÉE SUR UNE SORTIE DE COURANT ACTIVE D'UN APPAREIL DE TERRAIN

(30) Priorität: 29.12.2011 DE 102011090116; 05.01.2012 DE 102012200105
(43) Veröffentlichungstag der Anmeldung: 05.11.2014
(73) Patentinhaber: Endress+Hauser Flowtec AG, 4153 Reinach (CH)
(72) Erfinder: BRUDERMANN, Matthias, CH-4313 Moehlin (CH); SIMON, Antoine, F-68300 St. Louis (FR); FINK, Nikolai, CH-4147 Aesch (CH); KOLLMER, Daniel, 79689 Maulburg (DE); KOUDAL, Ole, CH-5452 Oberrohrdorf (CH)
(74) Vertreter: Andres, Angelika Maria
(86) Internationale Anmeldenummer: PCT/EP2012/073391
(87) Internationale Veröffentlichungsnummer: WO 2013/097995

(56) Entgegenhaltungen:
- US-A1- 2007 152 645

## Beschreibung

Die Erfindung betrifft eine Schaltungsanordnung zur Reduzierung der Verlustleistung bei einem aktiven Stromausgang eines Feldgeräts zur Bestimmung und/oder Beeinflussung einer Prozessgröße, wobei die Prozessgröße über einen einstellbaren Stromwert repräsentiert wird.
In der Prozess- ebenso wie in der Fabrikautomatisierungstechnik werden vielfach Feldgeräte eingesetzt, die zur Erfassung und/oder Beeinflussung von Prozessgrößen dienen. Zur Erfassung von Prozessgrößen dienen Messgeräte, wie beispielsweise Durchflussmessgeräte, Füllstandsmessgeräte, Druck- und Temperaturmessgeräte, pH-Messgeräte, Leitfähigkeitsmessgeräte, usw., welche die entsprechenden Prozessgrößen Durchfluss, Füllstand, Druck, Temperatur, pH-Wert bzw. Leitfähigkeit erfassen. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Unter dem in Verbindung mit der Erfindung verwendeten Begriff 'Feldgeräte' sind somit alle Typen von Messgeräten und Aktoren zu subsumieren. Als Feldgeräte werden in Zusammenhang mit der Erfindung darüber hinaus alle Geräte bezeichnet, die prozessnah eingesetzt werden und die prozessrelevante Informationen liefern oder verarbeiten.
Bei Feldgeräten, die in der Automatisierungstechnik eingesetzt sind, werden Stromausgänge zur Signalisierung einer von dem Feldgerät erfassten Prozessgröße benutzt. Ein Stromausgang ist eine Schnittstelle zwischen dem Feldgerät und der Außenwelt. Ein Stromausgang ist unidirektional und ermöglicht die Kommunikation von dem Feldgerät zu einem eine Last darstellenden Peripheriegerät. Bei dem Peripheriegerät handelt es sich beispielsweise um einen Datenlogger oder eine Anzeigeeinheit, die mit dem Feldgerät verbunden ist.
Bei Verwendung des in der Automatisierungstechnik gebräuchlichen 4-20mA Standards repräsentiert ein Stromwert, der zwischen 4mA und 20 mA liegt, die Prozessgröße innerhalb eines vorgegebenen Wertebereichs. Zur Übermittlung eines Alarmzustandes werden Stromwerte unterhalb von 4mA bzw. oberhalb von 20mA verwendet. Bei Vierleiter-Feldgeräten können die Stromausgänge aktiv betrieben werden, und man spricht in diesem Zusammenhang von aktiven Stromausgängen. Ein Vierleiter-Feldgerät hat üblicherweise einen Energieversorgungseingang mit zwei Eingangsleitungen für eine externe Energieversorgung und einen Stromausgang mit zwei Ausgangsleitungen als Maß für die von dem Feldgerät zu bestimmende und/oder zu beeinflussende Prozessgröße.
Bei bekannten Stromausgängen wird die Last zwischen eine Spannungsquelle, die eine vorgegebene Spannung liefert, und einen Stromsteller geschaltet, der über einen Widerstand gegen ein Bezugspotential, insbesondere gegen Masse, geschaltet ist. Beispielsweise beträgt die vorgegebene Spannung der Spannungsquelle 24 V. Bei dem Stromsteller handelt es sich bevorzugt um einen Transistor, der beispielsweise als FET oder als bipolarer Transistor ausgeführt sein kann. Der Stromsteller muss in Abhängigkeit von der an den Stromausgang angeschlossenen Last und in Abhängigkeit von dem einzustellenden Stromwert die überschüssige Energie in Verlustleistung und damit in Wärme umwandeln. Bei der bekannten Lösung wird üblicherweise ein Großteil der zur Verfügung gestellten Energie in dem Stromsteller in Verlustleistung umgewandelt. Aufgrund der Miniaturisierung der Feldgeräte stellt die Ableitung der Abwärme, die durch die Vernichtung der überschüssigen Energie entsteht, in zunehmendem Maße ein Problem dar. Die kleinen Gehäuse sind nur begrenzt in der Lage, die Wärme an die Umgebung abzugeben, was zu einer unerwünschten Aufheizung der Gehäuse der Feldgeräte führt. Hinzu kommt, dass das Verheizen von Energie als Energieverschwendung anzusehen ist und von Kunden immer weniger akzeptiert wird.

US2007/0152645 offenbart ein Feldgerät mit einer Schaltungsanordnung, wobei eine primäre Schaltung einen Sensor zur Messung einer Prozessgröße aufweist, wobei die Prozessgröße über einen einstellbaren Stromwert (4-20 mA) repräsentiert wird. Die Schaltungsanordnung weist weiter eine sekundäre Schaltung mit einer externen Last auf, die durch die primäre Schaltung gespeist wird. US2007/0152645 offenbart eine Einstellung des Stroms, der der sekundären Schaltung zur Verfügung steht, wobei Verluste an der Leistung der ersten Schaltung somit reduziert werden.

Der Erfindung liegt die Aufgabe zugrunde, eine Schaltungsanordnung vorzuschlagen, die die Verlustleistung bei einem aktiven Stromausgang eines Feldgeräts reduziert.

Die Aufgabe wird durch eine Schaltungsanordung gemäß Anspruch 1 gelöst, nämlich dadurch, dass eine externe Spannungsversorgung, ein Spannungsregler und ein dem Spannungsregler zugeordneter Regelkreis vorgesehen sind. Der Regelkreis ist so ausgestaltet, dass der Spannungsregler die Spannung einer parallel zu dem Stromausgang geschalteten externen Last in Abhängigkeit von dem aktuell eingestellten Stromwert derart regelt, dass der externen Last im Wesentlichen nur die jeweils benötigte Spannung zur Verfügung steht. Im Grenzfall erfolgt die Regelung derart, dass die Verlustleistung an einem Stromsteller, z.B. an einem Transistor gegen Null geht.

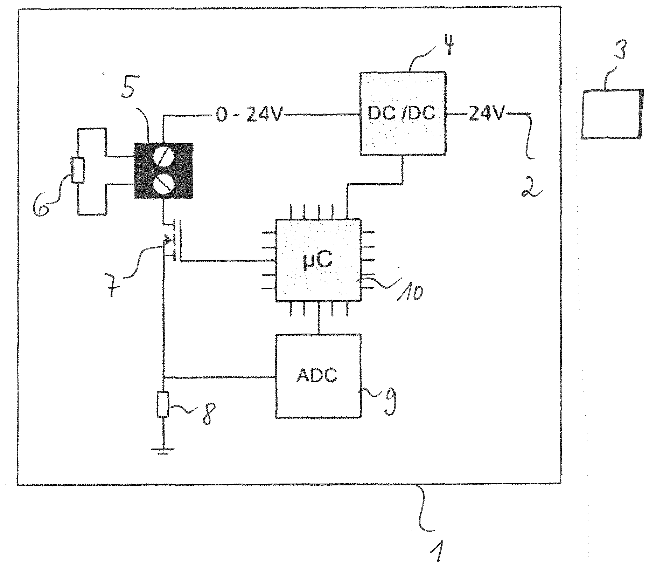

Der Regelkreis umfasst erfindungsgemäß einen Stromsteller, insbesondere einem Transistor, für die Einstellung des Stromwertes, einen Analog-Digital-Wandler, eine Rechen-/Steuereinheit und einen mit dem Stromsteller in Reihe geschalteten Referenzwiderstand. Der Referenzwiderstand ist gegen ein Bezugspotential, insbesondere gegen Masse geschaltet. Erfindungsgemäß ist der Analog-Digital-Wandler so angeordnet, dass er die Spannung des Referenzwiderstandes misst, die gemessene Spannung digitalisiert und den digitalisierten Spannungswert der Rechen-/Steuereinheit zuführt.
Der Spannungsregler liefert im Idealfall eine annähernd korrekte Voreinstellung der für die Last zur Verfügung gestellten Spannung. Der Stromsteller sorgt für die Feineinstellung des Stromwertes, so dass dieser den korrekten Wert der Prozessgröße widerspiegelt. Die Schaltungsanordnung ist so ausgelegt, dass der Stromsteller, bei dem es sich bevorzugt um einen Transistor handelt, nur noch sehr begrenzt Energie vernichten muss, um den der Prozessgröße entsprechenden Stromwert korrekt einzustellen. Damit genügt das Feldgerät den heute gängigen und auf Energieeinsparung ausgerichteten Umweltstandards.
Da die zuvor beschriebene erfindungsgemäße Lösung relativ rechenintensiv ist, schlägt eine Weiterbildung vor, dass der Regelkreis den Spannungsregler entsprechend vorgegebener Spannungsstufen ansteuert. Beispielsweise stehen für einen Bereich von 4-20mA zehn Spannungsstufen zur Verfügung. Das bedeutet, dass eine Anpassung der von dem Spannungsregler gelieferten Spannung nicht bei jeder Änderung des einzustellenden Stromwertes erfolgen muss. Da stets zumindest die zur Einstellung des Stromwertes erforderliche Spannung bereitgestellt werden muss, tritt bei dieser stufenweisen Einstellung der Spannung ggf. überschüssige Leistung auf, die von dem Stromsteller in Verlustleistung umgesetzt werden muss. Allerdings entspricht die Verlustleistung nur noch einem Bruchteil der Verlustleistung, die bei der aus dem Stand der Technik bekannten Lösung ohne Voreinstellung der Spannung auftritt. Erfindungsgemäß sieht die Schaltungsanordnung vor, dass die Rechen-/Steuereinheit anhand der jeweils eingestellten Spannung bzw. Spannungsstufe und anhand des aktuellen Stromwertes die von der Last benötigte Leistung berechnet und den Spannungsregler und den Stromsteller entsprechend ansteuert.
Um die Verlustleistung weiter zu reduzieren, wird ein Spannungsregler mit einem hohen Wirkungsgrad eingesetzt. Bei dem Spannungsregler handelt es sich bevorzugt um einen DC/DC-Wandler. Durch diese Ausgestaltung wird sichergestellt, dass der Spannungsregler selbst wenig Verlustleistung erzeugt, wenn er die von der Spannungsversorgung bereitgestellte Spannung in eine niedrige Spannung umwandelt.
Gemäß einer vorteilhaften Ausgestaltung der erfindungsgemäßen Schaltungsanordnung ist der Regelkreis so ausgestaltet, dass für den Fall, dass ein Fehler, insbesondere eine Überlast (Kurzschluss als Sonderfall der Überlast) an der externen Last, eine Unterbrechung der Stromzufuhr (Leitungsbruch) zur externen Last oder eine Fehlbeschaltung am Signalausgang des Feldgeräts auftritt, der Spannungsregler den Stromausgang abschaltet. Hierbei erkennt die Rechen-/Steuereinheit eine Überlast beispielsweise dadurch, dass der Stromsteller einen der Prozessgröße entsprechenden Stromwert nicht mehr einstellen kann, obwohl der Spannungsregler auf die maximal mögliche Spannung oder auf die nächsthöhere Spannungsstufe eingestellt ist. Zur Überprüfung, ob ein Fehlerfall vorliegt, muss nicht mehr der maximal verfügbare Strom eingestellt werden. Weiterhin ist vorgesehen, dass das Feldgerät bei Erkennen eines Fehlerfalls eine entsprechende Warnmeldung ausgibt.
Die Erfindung wird anhand der Fig. 1 näher erläutert. Fig. 1 zeigt eine bevorzugte Ausführungsform der erfindungsgemäßen Schaltungsanordnung zur Reduzierung der Verlustleistung bei einem aktiven Stromausgang 5 eines 4-Leiter- Feldgeräts.

Die Schaltungsanordnung ist Teil der Elektronik des Feldgeräts. Vorzugsweise handelt es sich um eines der Feldgeräte, die in der Beschreibungseinleitung vorgestellt worden sind.

Die in Fig. 1 gezeigte Schaltungsanordnung 1 ist Teil eines nicht im Detail dargestellten Vier-Leiter Feldgeräts. Über den Eingang 2 wird die Schaltungsanordnung 1 mit einer konstanten Spannung versorgt. Die Spannung von beispielsweise 24V wird von der externen Spannungsversorgung 3 geliefert. Die von der Spannungsversorgung 3 zur Verfügung gestellte konstante Spannung wird über den Spannungsregler 4 in eine niedrigere Spannung, die z.B. zwischen 0-24V liegt, umgewandelt. Bei dem Spannungsregler 4 handelt es sich bevorzugt um einen DC/DC Wandler mit hohem Wirkungsgrad.

Der Spannungsregler 4 ist mit dem Stromausgang 5 des Feldgeräts verbunden. An den Stromausgang 5 ist eine externe Last 6, z.B. eine Anzeigeeinheit, angeschlossen. Der Signalausgang 5 ist mit einem Stromsteller 7, insbesondere einem Transistor, verbunden, der über einen Referenzwiderstand 8 auf Referenzpotential, insbesondere auf Masse liegt. Zwischen dem Stromsteller 7 und dem Referenzwiderstand 8 greift ein Analog-Digital-Wandler 9 die über dem Referenzwiderstand (8) anliegende Spannung ab und wandelt die Spannung in ein digitales Signal um. Dieses digitale Signal wird an den Mikrocontroller 10 weitergeleitet, der den Spannungswert unter Zuhilfenahme des bekannten Widerstandswerte 8 in den tatsächlich fliessenden Strom umrechnet, wobei der Mikrocontroller 10 einerseits mit dem zu steuernden Anschluss des Transistors 7 und andererseits mit dem Spannungsregler 4 verbunden ist.

Der Schaltung liegt die Idee zugrunde, die an dem DC/DC-Wandler 4 liegende Spannung von beispielsweise 24 Volt, die von der Spannungsquelle 3 bereitgestellt wird, so zu verringern, dass nur die noch benötigte Spannung an der externen Last 6 anfällt, welche notwendig ist, um den Stromwert einzustellen, welcher als Ausgangssignal die Prozessgröße des Feldgeräts repräsentiert. Aufgrund dieser Voreinstellung der Spannung durch den Spannungsregler 4 muss am Stromsteller 7 nur die Energie vernichtet, die zur Einstellung des korrekten Stromwertes notwendig ist.

Der zur Ausgabe an die externe Last 6 benötigte Stromwert wird dabei über den Stromsteller 7 eingestellt. Um den Stromwert hinreichend genau einstellen zu können, wird mittels des Analog-Digital-Wandlers 9 die Spannung oberhalb des gegen Masse geschalteten Widerstandes 8 gemessen. Der Analog-Digital-Wandler 9 wandelt diese gemessene analoge Spannung in einen digitalen Wert um und leitet diesen an den Mikrocontroller 10 weiter. Der Mikrocontroller 10 errechnet anhand des digitalen Wertes eine aktuelle Stellgröße, welche an der Steuerelektrode des als Transistor 7 ausgestalteten Stromstellers zur Einstellung des korrekten Stromwertes anliegt.

Nach dem Einschalten des Feldgeräts wird zumindest näherungsweise der Innenwiderstand der externen Last 6 berechnet. Ändert sich die Prozessgröße, und es muss ein entsprechender Stromwert eingestellt werden, kann unter Zuhilfenahme des errechneten Innenwiderstands die am besten passende Spannungsstufe ausgewählt werden. Hierzu wandelt der Spannungsregler 4 die von der Spannungsversorgung 3 gelieferte Spannung in die von der Rechen-/Steuereinheit 10 ermittelte Spannung um. Somit liegt an der externen Last 6 die Spannung an, die es ermöglicht, den über den Innenwiderstand der Last 6 bestimmten Stromwert mittels des Stromstellers 7 einzustellen und die Verlustleistung über dem Stromsteller 7 zu minimieren.

Ändert sich während des Betriebs der Widerstanswert des Referenzwiderstands 8 - beispielsweise durch zusätzliches Anbringen eins HART Handhelds - erfolgt die Einstellung des korrekten Stromwertes über einen iterativen Prozess. Hierzu wird die Spannung sukzessive solange - z.B. in Spannungsstufen - erhöht, bis der korrekte Stromwert näherungsweise eingestellt ist. Da der als DC/DC-Wandler 4 ausgebildete Spannungsregler einen hohen Wirkungsgrad, beispielsweise von 85 %, aufweist, ist die Verlustleistung entsprechend gering. Hierdurch ist die Wärmebelastung der Schaltungsanordnung 1 gering.

Der Stromsteller 7 bildet zusammen mit dem Referenzwiderstand 8, dem Analog-Digital-Wandler 9 und dem Mikrocontroller 10 einen Regelkreis, welcher die Feineinstellung des an die externe Last 6 ausgegebenen Stromwertes ermöglicht.

Somit ist es möglich, ein Ausgangssignal an der externen Last 6 in Form eines Stromwertes bereitzustellen, bei welchem die Güte des Regelkreises mit der die Spannung reduzierende Wirkung des Spannungsreglers 4 kombiniert ist.

Ein weiterer Vorteil der Schaltungsanordnung 1 besteht darin, dass ein Fehler, insbesondere eine Überlast, ein Leitungsbruch oder eine Fehlbeschaltung erkannt werden kann. In Reaktion auf einen auftretenden Fehler deaktiviert der Spannungsregler 4 den Signalausgang 5.

Eine Überlast tritt auf, wenn der Innenwiderstand der externen Last 6 so gering ist, dass über den Spannungsregler 4 nicht mehr der benötigte Strom zur Verfügung gestellt werden kann. Die Überlast wird über den Strom detektiert, welcher aus der oberhalb des Referenzwiderstandes 8 abgegriffen Spannung und dem bekanntem Widerstandswert des Referenzwiderstands 8 durch die Rechen-/Steuereinheit 10 errechnet wird . Die Überlast wird dadurch erkannt, dass der gewünschte Stromwert nicht über den Stromsteller 7 eingestellt werden kann, obwohl der Spannungsregler 4 bereits die maximale benötigte Spannung liefert. Vorteilhaft ist, dass sich die externe Last 6 überprüfen lässt, ohne dass der maximale Stromwert eingestellt werden muss.

Das Feldgerät kann darüber hinaus so ausgebildet sein, das es eine Warnung ausgibt, wenn die externe Last 6 zu hoch ist oder an dem Signalausgang 5 nicht angeschlossen ist. Ebenso kann ein Leitungsbruch signalisiert werden.

In einer Ausprägung ist der Stromausgang mit einem HART Signal moduliert.

## Patentansprüche

1. Schaltungsanordnung zur Reduzierung der Verlustleistung bei einem aktiven Stromausgang (5) eines Feldgeräts zur Bestimmung und/oder Beeinflussung einer Prozessgröße, wobei die Prozessgröße über einen einstellbaren Stromwert repräsentiert wird, mit einer externen Spannungsversorgung (3), dem aktiven Stromausgang (5) zum Anschluss einer externen Last (6),
einem Spannungsregler (4) und einem dem Spannungsregler (4) zugeordneten Regelkreis (7, 8, 9, 10), der einen Stromsteller (7) für die Einstellung des Stromwertes, einen Analog-Digital-Wandler (9), eine Rechen-/Steuereinheit (10) und einen mit dem Stromsteller (7) in Reihe geschalteten Referenzwiderstand (8) umfasst, wobei der Referenzwiderstand (8) gegen ein Bezugspotential geschaltet ist,
wobei der Stromausgang (5) mit dem Stromsteller (7) verbunden ist,
**dadurch gekennzeichnet, daß** der Regelkreis (7, 8, 9, 10) so ausgestaltet ist, dass der Spannungsregler (4) die Spannung der
parallel zu dem Stromausgang (5) geschalteten externen Last (6) in Abhängigkeit von dem aktuell eingestellten Stromwert so regelt, dass der externen Last (6) im Wesentlichen nur die jeweils benötigte Spannung zur Verfügung steht,
- wobei der Analog-Digital-Wandler (9) so angeordnet ist, dass er die Spannung des Referenzwidersandes (8) misst, die gemessene Spannung digitalisiert und den digitalen Spannungswert der Steuereinheit (10) zuführt,
- und wobei die Rechen-/Steuereinheit (10) ausgestaltet ist, anhand der gemessenen Spannung und des bekannten Widerstandswerts (8) und aufgrund des aktuell einzustellenden Stromwertes die von der Last (6) benötigte Spannung zu berechnen und den Spannungsregler (4) entsprechend anzusteuern.

2. Schaltungsanordnung nach Anspruch 1, wobei der Regelkreis (7, 8, 9, 10) ausgestaltet ist, den Spannungsregler (4) in vorgegebenen Spannungsstufen anzusteuern und ggf. auftretende überschüssige Leistung in Verlustleitung umzusetzen.

3. Schaltungsanordnung nach Anspruch 1 oder 2, wobei als Stromsteller (7) ein Transistor dient.

4. Schaltungsanordnung nach einem der vorherigen Ansprüche, wobei das Bezugspotential Masse ist.

5. Schaltungsanordnung nach einem der vorherigen Ansprüche, wobei es sich bei dem Spannungsregler (4) um einen DC/DC-Wandler handelt.

6. (Geändert) Schaltungsanordnung nach einem der vorhergehenden Ansprüche, wobei der Regelkreis (7, 8, 9, 10) so ausgestaltet ist, dass für den Fall, dass ein Fehler, insbesondere eine Überlast an der externen Last (6), eine Unterbrechung der Stromzufuhr zur externen Last (6) oder eine Fehlbeschaltung am Signalausgang (5) des Feldgeräts (1) auftritt, der Spannungsregler (4) den Stromausgang (5) abschaltet.

7. Schaltungsanordnung nach dem vorherigen Anspruch, wobei die Rechen-/Steuereinheit ausgestaltet ist, den Fehler dadurch zu erkennen, dass der Stromsteller (7) einen der Prozessgröße entsprechenden Stromwert (4-20mA) nicht einstellen kann, obwohl der Spannungsregler (4) die maximal benötigte Spannung liefert.

8. Schaltungsanordnung nach einem der vorgenannten Ansprüche, wobei eine zusätzliche Schaltung vorgesehen ist, die ausgestaltet ist, dem Signal des Stromausgangs (5) zusätzlich ein HART konformes Signal aufzumodulieren.

9. Schaltungsanordnung nach einem der vorgenannten Ansprüche, wobei an dem Strom- bzw. Signalausgang (5) zusätzlich eine Schaltung zur Demodulierung eines HART konformen Signals angeschlossen ist.

## Claims

1. Circuit arrangement to reduce power loss in the case of an active current output (5) of a field device for determining and/or influencing a process variable, wherein the process variable is represented by a configurable current value, with an external voltage supply (3), the active current output (5) for connection to an external load (6), a voltage regulator (4) and a control circuit (7, 8, 9, 10) assigned to the voltage regulator (4), said circuit comprising a current regulator (7) to set the current value, an analog-to-digital converter (9), a computer/control unit (10) and a reference resistor (8) switched in series with the current regulator (7), wherein the reference resistor (8) is switched with respect to a reference potential, wherein the current output (5) is connected to the current regulator (7),
**characterized in that**
the control circuit (7, 8, 9, 10) is designed in such a way that the voltage regulator (4) regulates the voltage of the external load (6) switched in parallel to the current output (5) as a function of the current value currently set such that essentially only the voltage that is needed is made available to the external load (6),
- wherein the analog-to-digital converter (9) is arranged in such a way that it measures the voltage of the reference resistor (8), digitizes the measured voltage and supplies the digital voltage value to the control unit (10),
- and wherein the computer/control unit (10) is designed to calculate the voltage required by the load (6) using the measured voltage and the known resistance value (8) and on the basis of the current value to be currently set, and to activate the voltage regulator (4) accordingly.

2. Circuit arrangement as claimed in Claim 1, wherein the control circuit (7, 8, 9, 10) is designed to activate the voltage regulator (4) in predefined voltage stages and to convert any excess power that may be occur into power loss.

3. Circuit arrangement as claimed in Claim 1 or 2, wherein a transistor acts as a current regulator (7).

4. Circuit arrangement as claimed in one of the previous claims, wherein the reference potential is ground.

5. Circuit arrangement as claimed in one of the previous claims, wherein the voltage regulator (4) is a DC/DC converter.

6. (Modified) circuit arrangement as claimed in one of the previous claims, wherein the control circuit (7, 8, 9, 10) is designed in such a way that in the event that an error occurs, particularly an overload at the external load (6), an interruption in the current supply to the external load (6) or faulty wiring at the signal output (5) of the field device (1), the voltage regulator (4) switches off the current output (5).

7. Circuit arrangement as claimed in the previous claim, wherein the computer/control unit is designed to detect the error by the fact that the current regulator (7) is unable to set a current value (4-20 mA) that corresponds to the process variable even though the voltage regulator (4) supplies the maximum voltage required.

8. Circuit arrangement as claimed in one of the previous claims, wherein an additional circuit is provided that is designed to additionally modulate a signal that conforms to HART onto the signal of the current output (5).

9. Circuit arrangement as claimed in one of the previous claims, wherein a circuit for the demodulation of a signal that conforms to HART is connected to the current or signal output (5).

## Revendications

1. Configuration de circuit destinée à la réduction de la puissance dissipée sur une sortie courant (5) active d'un appareil de terrain en vue de la détermination et/ou de l'influence d'une grandeur de process, la grandeur de process étant représentée par le biais d'une valeur de courant réglable, avec une tension d'alimentation (3) externe, la sortie courant (5) active destinée au raccordement d'une charge externe (6), un régulateur de tension (4) et un circuit de régulation (7, 8, 9, 10) attribué au régulateur de tension (4), lequel circuit comprend un régulateur de courant (7) pour le réglage de la valeur de courant, un convertisseur analogique-numérique (9), une unité de calcul / commande (10) et une résistance de référence (8) couplée en série avec le régulateur de courant (7), la résistance de référence (8) étant commutée par rapport à un potentiel de référence,
pour laquelle la sortie courant (5) est reliée à un régulateur de courant (7), **caractérisée**
**en ce que** le circuit de régulation (7, 8, 9, 10) est conçu afin que le régulateur de tension (4) régule la tension de la charge externe (6) couplée parallèlement à la sortie courant (5) en fonction de la valeur de courant actuellement réglée, de telle sorte que la charge externe (6) ne dispose pour l'essentiel que de la tension nécessaire,
- pour laquelle le convertisseur analogique-numérique (9) est disposé de telle manière à ce qu'il mesure la tension de la résistance de référence (8), numérise la tension mesurée et achemine la valeur de tension numérique à l'unité de commande (10),
- et pour lequel l'unité de calcul / commande (10) est conçue de telle sorte à calculer la tension requise par la charge (6) au moyen de la tension mesurée et de la valeur de résistance (8) connue, ainsi qu'au moyen de la valeur de courant actuellement à régler, et de commander le régulateur de tension (4) en conséquence.

2. Configuration de circuit selon la revendication 1, pour laquelle le circuit de régulation (7, 8, 9, 10) est conçu afin de commander le régulateur de tension (4) en paliers de tension prédéfinis et de convertir la puissance excédentaire éventuellement générée en puissance dissipée.

3. Configuration de circuit selon la revendication 1 ou 2, pour laquelle un transistor sert de régulateur de courant (7).

4. Configuration de circuit selon l'une des revendications précédentes, pour laquelle le potentiel de référence est la masse.

5. Configuration de circuit selon l'une des revendications précédentes, pour laquelle il s'agit, concernant le régulateur de tension (4), d'un convertisseur CC-CC.

6. Configuration de circuit selon l'une des revendications précédentes, pour laquelle le circuit de régulation (7, 8, 9, 10) est conçu de telle sorte qu'en cas d'apparition d'un défaut, notamment une surcharge sur la charge externe (6), une interruption de l'alimentation vers la charge externe (6) ou une erreur de câblage au niveau de la sortie signal (5) de l'appareil de terrain (1), le régulateur de tension (4) désactive la sortie courant (5).

7. Configuration de circuit selon la revendication précédente, pour laquelle l'unité de calcul / commande est conçue de telle sorte à détecter le défaut lorsque le régulateur de courant (7) n'est pas en mesure de régler une valeur de courant (4-20 mA) correspondant à la grandeur de process, bien que le régulateur de tension (4) fournisse la tension maximale nécessaire.

8. Configuration de circuit selon l'une des revendications précédentes, pour laquelle est prévu un circuit supplémentaire, lequel est conçu de telle sorte à moduler au signal de la sortie courant (5) un signal conforme HART supplémentaire.

9. Configuration de circuit selon l'une des revendications précédentes, pour laquelle un circuit destiné à la démodulation d'un signal conforme HART est raccordé sur la sortie courant ou la sortie signal (5).
